(19) Europäisches Patentamt
European Patent Office
Office européen des brevets

(11) **EP 3 645 865 B1**

(12) **EUROPÄISCHE PATENTSCHRIFT**

(45) Veröffentlichungstag und Bekanntmachung des Hinweises auf die Patenterteilung:
**11.01.2023   Patentblatt 2023/02**

(21) Anmeldenummer: **18729661.1**

(22) Anmeldetag: **06.06.2018**

(51) Internationale Patentklassifikation (IPC):
**F03D 7/02** *(2006.01)*     **F03D 9/25** *(2016.01)*

(52) Gemeinsame Patentklassifikation (CPC):
**F03D 7/028; F03D 9/255;** F05B 2270/1033;
F05B 2270/3032; F05B 2270/335

(86) Internationale Anmeldenummer:
**PCT/EP2018/064842**

(87) Internationale Veröffentlichungsnummer:
**WO 2019/001917 (03.01.2019 Gazette 2019/01)**

(54) **WINDENERGIESYSTEM UND VERFAHREN ZUM REGELN EINER WINDKRAFTANLAGE**

WIND ENERGY SYSTEM AND METHOD FOR CONTROLLING A WIND ENERGY SYSTEM

SYSTÈME ÉOLIEN ET PROCÉDÉ DE RÉGULATION D'UNE INSTALLATION ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2017   DE 102017114309**

(43) Veröffentlichungstag der Anmeldung:
**06.05.2020   Patentblatt 2020/19**

(73) Patentinhaber: **RWE Renewables GmbH**
**45141 Essen (DE)**

(72) Erfinder:
 • **FELTES, Christian**
  **22453 Hamburg (DE)**
 • **JAHN, Christian**
  **25451 Quickborn (DE)**
 • **THOMSEN, Nils**
  **25335 Elmshorn (DE)**
 • **RUNGE, Jörn**
  **31608 Marklohe (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**EP-A2- 2 636 894     WO-A1-2016/058617**
**DK-T3- 2 680 390**

 • **F. Richert ET AL: "Kabeldimensionierung bei der Netzanbindung von Offshore-Windparks unter Ber?cksichtigung der zeitlichen Leistungsabgabe", DEWI Magazin Nr. 24, Februar 2004, 24. Februar 2004 (2004-02-24), Seiten 38-43, XP055127663, Gefunden im Internet: URL:http://www.dewi.de/dewi/fileadmin/pdf/ publications/Magazin_24/06.pdf [gefunden am 2014-07-09]**

**Beschreibung**

Die Anmeldung betrifft ein Windenergiesystem, insbesondere ein Offshore-Windenergiesystem, umfassend eine Mehrzahl von mit mindestens einem Kabelnetz verbundenen Windkraftanlagen, wobei das Kabelnetz zum Übertragen der von den verbundenen Windkraftanlagen eingespeisten elektrischen Leistung eingerichtet ist, mindestens eine Reglervorrichtung, eingerichtet zum Regeln der von mindestens einer der Windkraftanlagen in das Kabelnetz eingespeisten Leistung durch Bereitstellen von mindestens einem Leistungssollwert. Darüber hinaus betrifft die Anmeldung eine Reglervorrichtung und ein Verfahren zum Regeln einer Windkraftanlage.

Die Nachfrage nach elektrischer Energie aus regenerativen Quellen steigt stetig. Eine der zur Verfügung stehenden Ressourcen ist hierbei die Windenergie. Eine Windkraftanlage ist allgemein dazu eingerichtet, die kinetische Energie des Windes mittels eines Rotors und eines Generators in elektrische Energie zu wandeln.

Windenergiesysteme gemäß der vorliegenden Anmeldung umfassen eine Mehrzahl von Windkraftanlagen. Die Windkraftanlagen können über mindestens ein (elektrisches) Kabelnetz miteinander verbunden sein. Das Windenergiesystem, umfassend die Windkraftanlagen und das elektrische Kabelnetz, verfügt hierbei über mindestens einen elektrischen Anschlusspunkt, um die von dem Windenergiesystem bereitgestellte bzw. erzeugte elektrische Energie in ein weiteres elektrische System, beispielsweise ein angeschlossenes öffentliches Stromnetz, einzuspeisen. Mit anderen Worten umfasst ein anmeldungsgemäßes Windenergiesystem, insbesondere die elektrische Topologie des Windenergiesystems, nicht mehr Teile des weiteren elektrischen Systems.

Um den Gesamt-Energieertrag zu maximieren, kann das Windenergiesystem in Gebieten mit hoher Windwahrscheinlichkeit und -intensität angeordnet werden. Besonders geeignet sind Standorte auf der offenen See, auch Offshore-Gebiete genannt. Die Anforderungen an Offshore-Windenergiesysteme bzw. Offshore-Windenergieparks unterscheiden sich jedoch deutlich von den Anforderungen an Onshore-Windenergiesysteme. So müssen als Windenergieeinrichtungen spezielle Offshore-Windenergieeinrichtungen eingesetzt werden. Insbesondere ist es ein Anliegen, den aufgrund der speziellen Lage auf See und der damit verbundenen schweren Erreichbarkeit großen Wartungs- und Instandhaltungsaufwand zu reduzieren.

Darüber hinaus ist es ein stetiges Anliegen, die abgebbare Leistungsmenge zu maximieren. Insbesondere bei einem Netzfehler innerhalb des Windenergiesystems ist es im Stand der Technik üblich, die von den Windkraftanlagen in das Kabelnetz eingespeiste Leistung um einen fixen (vorgegebenen) Wert zu reduzieren. Beispielsweise kann eine Reglervorrichtung bei Detektion eines Netzfehlers entsprechende Leistungssollwerte für die Windkraftanlagen bereitstellen und an die Windkraftanlagen über ein Kommunikationsnetz übertragen. Hierdurch wird zwar sichergestellt, dass weitere elektrische Betriebsmittel (Kabelnetz, Transformatoren, etc.) nicht beschädigt werden. Jedoch wird die an ein weiteres elektrisches System abgebbare Leistung signifikant reduziert. Dokumente WO2016/058617 und EP2636894 zeigen Beispiele des Standes der Technik von Steuersystemen für Windturbinenparks.

Daher liegt der Anmeldung die Aufgabe zugrunde, ein Windenergiesystem bereitzustellen, welches eine Erhöhung der abgebbaren Leistung, insbesondere bei einem Netzfehler im Windenergiesystem, ohne eine Erhöhung eines Risikos der Beschädigung von elektrischen Betriebsmitteln ermöglicht.

Die Aufgabe wird gemäß einem ersten Aspekt der Anmeldung durch ein Windenergiesystem, insbesondere ein Offshore-Windenergiesystem, gemäß Anspruch 1 gelöst. Das Windenergiesystem umfasst eine Mehrzahl von mit mindestens einem Kabelnetz verbundenen Windkraftanlagen. Das Kabelnetz ist zum Übertragen der von den verbundenen Windkraftanlagen eingespeisten elektrischen Leistung eingerichtet Das Windenergiesystem umfasst mindestens eine Reglervorrichtung, eingerichtet zum Regeln der von mindestens einer der Windkraftanlagen in das Kabelnetz eingespeisten Leistung durch Bereitstellen von mindestens einem Leistungssollwert. Mindestens eine Temperaturerfassungseinrichtung ist vorgesehen, eingerichtet zum Erfassen der Temperatur des Kabelnetzes. Mindestens eine Zustandserfassungseinrichtung ist vorgesehen, eingerichtet zum Erfassen des Zustands des Windenergiesystems. Die Reglervorrichtung umfasst mindestens eine Reglereinrichtung, eingerichtet zum Bestimmen des (mindestens einen) Leistungssollwerts basierend auf der erfassten Temperatur und dem erfassten Zustand.

Indem im Gegensatz zum Stand der Technik keine pauschale Reduzierung der von den Windkraftanlagen in das Kabelnetz eingespeisten Leistung erfolgt, sondern anmeldungsgemäß die Leistung von mindestens einer Windkraftanlage abhängig von der (augenblicklichen) Temperatur des Kabelnetzes und des (augenblicklichen) Zustands des Windenergiesystems geregelt wird, wird insbesondere bei einem Netzfehler die abgegebene Leistungsmenge maximiert und gleichzeitig sichergestellt, dass keine weiteren elektrischen Betriebsmittel beschädigt werden.

Das Windenergiesystem ist insbesondere ein Offshore-Windenergiesystem. Ein anmeldungsgemäßes Windenergiesystem umfasst insbesondere mindestens eine (Offshore-)Umspannstation und eine Mehrzahl von Windkraftanlagen. Die Windkraftanlagen können vorzugsweise in Form von mindestens einem Strang (auch String genannt) angeordnet sein. Ein Strang umfasst zwei oder mehr Windkraftanlagen, die elektrisch in Reihe angeordnet sind. Vorzugsweise kann eine Mehrzahl von Strängen vorgesehen sein. Ein Ende eines Strangs kann elektrisch mit der Umspannstation gekoppelt sein. Das andere Ende eines Strangs kann eine elektrische Verbindung zu einem Ende eines weiteren Strangs aufweisen. Im Normalbetrieb des Windenergiesystems, also für den Fall, dass kein Netzfehler vorliegt, kann diese elektrische Verbindung geöffnet bzw. getrennt sein. Tritt ein Netzfehler in einem der zwei Stränge auf, kann die elektrische Verbindung (auch Loop-Verbindung genannt) geschlossen werden, so dass elektrische Leistung über diese Verbindung transportiert werden kann. Es versteht sich, dass diese elektrische Verbindung (oder eine weitere entsprechend gebildete elektrische Verbindung) auch zwischen anderen Verbindungspunkten von den Strängen angeordnet sein kann.

Elektrisch ist jede Windkraftanlage des Windenergiesystems an das Kabelnetz des Windenergiesystems angeschlossen. Eine Windkraftanlage speist die aus der kinetischen Windenergie erzeugte elektrische Leistung, insbesondere einen elektrischen Strom, in das Kabelnetz ein. Beispielsweise kann die eingespeiste Leistung über das Kabelnetz an die (Offshore-)Umspannstation geliefert werden. Ein anmeldungsgemäßes Kabelnetz umfasst insbesondere eine Mehrzahl von Energiekabeln, insbesondere Seekabeln, die elektrische Verbindungen bilden. Diese Kabel können derart dimensioniert sein, dass im Normalbetrieb auch bei maximal von den Windkraftanlagen eingespeister Leistung die maximale Stromtragfähigkeit dieser Kabel nicht überschritten wird. Hierbei ist die oben beschriebene elektrische Verbindung (Loop-Verbindung) ebenfalls Teil des Kabelnetzes.

Anmeldungsgemäß umfasst das Windenergiesystem mindestens eine Temperaturerfassungseinrichtung. Die Temperaturerfassungseinrichtung ist eingerichtet, die Temperatur des Kabelnetzes zu erfassen. Das Erfassen der Temperatur umfasst insbesondere das Messen der augenblicklichen Temperatur des Kabelnetzes an mindestens einer Kabelnetzposition bzw. einem Messpunkt. Mindestens ein geeigneter Messpunkt kann gewählt werden. Vorzugsweise kann die Temperatur (nahezu) kontinuierlich gemessen werden. Indem die Temperatur des Kabelnetzes bei der Regelung berücksichtigt wird, kann sichergestellt werden, dass eine maximal zulässige Temperatur des Kabelnetzes nicht überschritten wird.

Zudem umfasst das Windenergiesystem anmeldungsgemäß eine Zustandserfassungseinrichtung. Die Zustandserfassungseinrichtung ist zum Erfassen des Zustands des Windenergiesystems eingerichtet. Das Erfassen des Zustands umfasst insbesondere das Erfassen des augenblicklichen Zustands des Windenergiesystems. Anmeldungsgemäß ist unter dem Zustand des Windenergiesystems insbesondere der elektrische Zustand zu verstehen. Beispielsweise wird der elektrische Zustand durch Messen von elektrischen Parametern, wie einem durch das Kabelnetz fließenden Strom, erfasst. Beispielsweise können zur Erfassung des Zustands des Windenergiesystems die derzeitigen Leistungssollwerte der Windkraftanlagen, die derzeitig eingespeiste Leistung (bzw. Strom), der derzeitige Zustand von elektrischen Komponenten (z.B. Transformator, Umrichter), etc. erfasst werden. Indem der (elektrische) Zustand des Windenergiesystems, insbesondere der elektrischen Betriebsmittel des Windenergiesystems, bei der Regelung berücksichtigt wird, kann die maximal von dem Windenergiesystem bereitgestellte Leistung, bei der keine Gefährdung der elektrischen Betriebsmittel vorliegt, erhöht werden.

Die Reglervorrichtung umfasst eine Reglereinrichtung. Die Reglereinrichtung kann basierend auf erfasster Temperatur und erfasstem Zustand mindestens einen Leistungssollwert für mindestens eine Windkraftanlage generieren. Der Leistungssollwert wird insbesondere derart generiert, dass die aufgrund des augenblicklichen Zustands und augenblicklicher Kabelnetztemperatur maximal mögliche Leistung von den Windkraftanlagen in das Kabelnetz eingespeist wird. Es versteht sich, dass zwei oder mehr individuelle Leistungssollwerte vorgegeben werden können. Ferner umfasst das Bestimmen des (mindestens einen) Leistungssollwerts ein Erhöhen oder Reduzieren (also ein Anpassen) eines vorherigen Leistungssollwerts.

Das Windenergiesystem kann ein (drahtloses und/oder drahtgebundenes) Kommunikationsnetz umfassen. Insbesondere können zumindest jede Windkraftanlage, insbesondere das jeweilige lokale Steuermodul, und die Reglervorrichtung an das Kommunikationsnetz angeschlossen sein. Der mindestens eine Leistungssollwert für die mindestens eine Windkraftanlage kann dann von der Reglervorrichtung durch geeignete Sendemittel an die mindestens eine Windkraftanlage über das Kommunikationsnetz übertragen werden. Zudem können über das Kommunikationsnetz beispielsweise Sensordaten übertragen werden.

Gemäß einer ersten Ausführungsform des anmeldungsgemäßen Windenergiesystems kann die Reglereinrichtung mindestens ein Vergleichsmodul umfassen. Das Vergleichsmodul kann zum Vergleichen der erfassten Temperatur und mindestens einer vorgegebenen Solltemperatur eingerichtet sein. Die Solltemperatur ist insbesondere eine maximal zulässige Temperatur. Die Reglereinrichtung kann zumindest zum Bestimmen des Leistungssollwerts basierend auf dem Vergleichsergebnis eingerichtet sein. Insbesondere für den Fall, dass die erfasste Temperatur die Solltemperatur überschreitet, kann das Bestimmen des Leistungssollwerts basierend auf diesem Vergleichsergebnis das Reduzieren des Leistungssollwerts umfassen.

Vorzugsweise kann die mindestens eine vorgegebene Solltemperatur von dem 2K-Kriterium abhängig sein. Das 2K-Kriterium ist insbesondere von einem Seekabel einzuhalten. Für das Betreiben eines Seekabels bestehen bestimmte Umweltschutzauflagen. Eine dieser Umweltschutzauflagen ist das einzuhaltende so genannte 2K-Kriterium. Das 2K-Kriterium verlangt, dass der Temperaturanstieg im Meeresboden (oberhalb) des Seekabels in einer Tiefe von 0,2 m bis 0,3 m 2 Kelvin nicht übersteigen darf. Beispielsweise kann die Regelung der Leistung, die von mindestens einer Windkraftanlage unter Einhaltung des 2K-Kriteriums in das Energienetz eingespeist wird, basierend auf einem stationären Ansatz erfolgen.

Bei einem ersten stationären Ansatz kann folgende Berechnungsvorschrift implementiert sein

$$\Delta\vartheta(x,y) = \frac{P'}{2\cdot\pi\cdot\lambda}\ln\frac{s'}{s}, \tag{a}$$

wobei $\Delta\vartheta(x, y)$ der Temperaturanstieg ist, P' die Verlustleistung pro Meter ist, $\lambda$ die thermische Leitfähigkeit des Meeresbodens, s die Entfernung des Seekabels zu dem Messbezugspunkt in einer Tiefe von 0,2 m von der Oberfläche des Meeresbodens und s' die Entfernung zu diesem Bezugspunkt von einem an dem Meeresboden gespiegelten Seekabel.

Alternativ oder zusätzlich zum stationären Ansatz kann die Regelung der Leistung mit einem dynamischen Ansatz erfolgen. Bei diesem Ansatz kann folgende Berechnungsvorschrift implementiert sein:

$$\Delta\vartheta(t) = \frac{P'}{2\cdot\pi\cdot\lambda}\cdot\left\{E1\left[\frac{s^2}{4\cdot\alpha_B\cdot t}\right] - E2\left[\frac{s'^2}{4\cdot\alpha_B\cdot t}\right]\right\}, \tag{b}$$

wobei E1(x) folgende Exponential-Integral-Funktion ist

$$E1(x) = -0{,}5772 - \ln x - \sum_{n=1}^{\infty}(-1)^n\cdot\frac{x^n}{(n\cdot n!)}. \tag{c}$$

Hierbei ist $x = \frac{s^2}{4\cdot\alpha_B\cdot t}$ und $\alpha_B = \frac{\lambda}{\delta\cdot c}$ ist, wobei $\alpha_\beta$ der thermische Diffusionskoeffizient des Meeresbodens ist, $\delta$ die Dichte des Meeresbodens ist und c die spezifische Wärmekapazität des Meeresbodens ist.

Der Vorteil des stationären Ansatzes, also eines zeitunabhängigen Ansatzes, besteht darin, dass diese Regelung besonders einfach und mit wenig Rechenzeit erfolgen kann. Gemäß einer Ausführungsform kann die Solltemperatur ein stationärer Temperatursollwert sein. Die Regelung der Leistung bzw. des Stroms kann zeitunabhängig sein. Mit anderen Worten wird der in das Kabelnetz eingespeiste Strom auf einen konstanten Stromwert geregelt.

Bei einem dynamischen Ansatz kann gemäß einer Ausführungsform die Solltemperatur ein zeitabhängiger Temperaturparameter sein. Die Regelung der Leistung bzw. des Stroms kann zeitabhängig sein. Indem eine zeitabhängige Regelung erfolgt, ist es möglich, die während des Betriebs eines Offshore-Windenergiesystems auftretenden Fluktuationen bei der Energieerzeugung, beispielsweise aufgrund von Änderungen der Windstärke, zu berücksichtigen bzw. zu nutzen. Insbesondere kann die Änderung der Temperatur im Meeresboden mit einer Zeitverzögerung von Stunden bis Tagen erfolgen. Daher kann beispielsweise zunächst ein höherer Strom bzw. eine höhere Leistung für eine bestimmte Zeitdauer als bei einer stationären Betrachtung durch das Kabelnetz, insbesondere einem bestimmten Abschnitt des Kabelnetzes, fließen, wenn anschließend, beispielsweise aufgrund einer geringeren Windstärke, ein gegenüber der stationären Betrachtung geringerer Strom durch das Kabelnetz, insbesondere dem bestimmten Abschnitt des Kabelnetzes, fließt. Beispielsweise kann in einem ersten Zeitraum ein Strom in den bestimmten Abschnitt des Kabelnetzes eingespeist werden, der größer ist, als der Strom in einem anschließenden zweiten Zeitraum. Die übertragbare Strommenge kann noch weiter gesteigert werden, wenn beispielsweise eine windschwächere Phase in den zweiten Zeitraum fällt.

Um bei dem dynamischen Ansatz den zeitabhängigen maximal zulässigen Strom zu bestimmen, kann bei einer Änderung des eingespeisten Stroms bzw. der eingespeisten Leistung eine erneutet Regelung erfolgen. Vorzugsweise kann zur Bestimmung des maximal zulässigen Stroms die aktuelle und zukünftige Temperaturänderung im Bezugspunkt kontinuierlich oder in bestimmten Zeitabständen in Abhängigkeit der Überlagerung des aktuellen und in der Vergangenheit eingespeisten Stroms berechnet werden.

Gemäß einer weiteren Ausführungsform kann der maximal zulässige Strom in Abhängigkeit des Widerstands des Seekabels und/oder des Abstands des Seekabels zu dem Bezugspunkt und/oder des Abstands des an der Meeresoberfläche gespiegelten Seekabels zu dem Bezugspunkt und/oder der thermischen Leitfähigkeit des Meeresbodens und/oder des thermischen Diffusionskoeffizienten des Meeresbodens bestimmt werden. Insbesondere kann ein zeitvarianter, maximal zulässiger Strom in Abhängigkeit sämtlicher Parameter bestimmt werden. Vorzugsweise kann eine Berechnungsvorschrift beispielsweise in einer geeigneten Recheneinrichtung implementiert werden. Die Recheneinrichtung, wie eine Prognoseeinrichtung, kann dazu eingerichtet sein, mittels dieser Parameter und dem Wert des Temperaturparameters durch die Berechnungsvorschrift den maximal zulässigen Strom zu berechnen. Eine zeitnahe und genaue Bestimmung des maximal zulässigen Stroms ist möglich.

Gemäß einer bevorzugten Ausführungsform kann die Temperaturerfassungseinrichtung zum Erfassen eines ersten Temperaturwerts an einer ersten Kabelnetzposition (bzw. einem ersten Messpunkt) und mindestens eines weiteren Temperaturwerts an mindestens einer weiteren Kabelnetzposition (bzw. einem weiteren Messpunkt) eingerichtet sein. Insbesondere kann die Temperaturerfassungseinrichtung zum Erfassen einer Vielzahl von Temperaturwerten an einer (entsprechenden Vielzahl) von Messpunkten eingerichtet sein. Beispielsweise kann die Temperaturerfassungseinrichtung eine Reflexionsmesseinrichtung umfassen. So kann in einem Kabel des Kabelnetzes ein Lichtwellenleiter integriert sein, der zum Messen der Temperaturwerte verwendet wird. Indem mehrere Temperaturwerte an verschiedenen Kabelnetzpositionen erfasst werden, kann eine umfassende Temperaturüberwachung des Kabelnetzes bereitgestellt werden. Die Reglereinrichtung kann zumindest zum Bestimmen des Leistungssollwerts basierend auf dem maximalen Temperaturwert der zumindest zwei Temperaturwerte eingerichtet sein. Insbesondere kann der maximale Temperaturwert der zumindest zwei oder mehr Temperaturwerte zunächst bestimmt werden und beispielsweise dem Vergleichsmodul bereitgestellt werden. Das Vergleichsmodul kann den maximalen Temperaturwert mit der Solltemperatur vergleichen. Wie oben beschrieben wurde, kann die Reglereinrichtung dann zumindest den mindestens einen Leistungssollwert basierend auf dem Vergleichsergebnis bestimmen.

Eine entsprechende Überwachung und Bestimmung kann insbesondere für jeden Strang separat durchgeführt werden. Vorzugsweise kann die Temperaturerfassungseinrichtung zum Erfassen eines ersten Temperaturwerts an einer ersten Kabelnetzposition eines ersten Strangs (bzw. einem ersten Messpunkt) und mindestens eines weiteren Temperaturwerts an mindestens einer weiteren Kabelnetzposition des erstens Strangs (bzw. einem weiteren Messpunkt) eingerichtet sein. Indem mehrere Temperaturwerte an verschiedenen Kabelnetzpositionen des ersten Strangs erfasst werden, kann eine umfassende Temperaturüberwachung des ersten Strangs bereitgestellt werden. Die Reglereinrichtung kann zumindest zum Bestimmen des Leistungssollwerts basierend auf dem maximalen Temperaturwert der zumindest zwei Temperaturwerte des ersten Strangs eingerichtet sein. Insbesondere kann der maximale Temperaturwert der zumindest zwei oder mehr Temperaturwerte zunächst bestimmt werden und beispielsweise dem Vergleichsmodul bereitgestellt werden. Das Vergleichsmodul kann den maximalen Temperaturwert mit der Solltemperatur vergleichen. Wie oben beschrieben wurde, kann die Reglereinrichtung dann zumindest den mindestens einen Leistungssollwert von mindestens einer Windkraftanlage des ersten Strangs und/oder eines mit dem ersten Strang elektrisch verbundenen weiteren Strangs basierend auf dem Vergleichsergebnis bestimmen.

Darüber hinaus kann die Temperaturerfassungseinrichtung gemäß einer weiteren Ausführungsform zum Bestimmen der Kabelnetzposition des maximalen Temperaturwerts der zumindest zwei Temperaturwerte (z.B. des ersten Strangs) eingerichtet sein. Die Reglereinrichtung kann zumindest zum Bestimmen des Leistungssollwerts basierend auf der bestimmten Kabelnetzposition eingerichtet sein. Beispielsweise kann basierend auf der bestimmten Kabelnetzposition der mindestens eine Leistungssollwert von der mindestens einen Windkraftanlage (des ersten Strangs und/oder eines mit dem ersten Strang elektrisch verbundenen weiteren Strangs) angepasst werden, dessen eingespeiste Leistung für den Temperaturwert an dieser Stelle zumindest teilweise verantwortlich ist. Beispielsweise kann sich aus der Erfassung des elektrischen Zustands ergeben, dass eine erste Windkraftanlage zu x % (z.B. 75 %) und mindestens eine weitere Windkraftanlage zu y % (z.B. 25 %) für den erhöhten Temperaturwert an der Stelle z ist. Die Reglereinrichtung kann dann abhängig von dem Anteil der jeweiligen Windkraftanlage an dem Temperaturwert mindestens einen Leistungssollwert der zumindest zwei Windkraftanlagen anpassen. Eine verbesserte Regelung kann bereitgestellt werden.

Gemäß einer weiteren Ausführungsform des anmeldungsgemäßen Windenergiesystems kann die Zustandserfassungseinrichtung mindestens ein Fehlerdetektionsmodul umfassen. Das Fehlerdetektionsmodul kann zum Detektieren von mindestens einem Netzfehler innerhalb des Windenergiesystems eingerichtet sein. Die Reglereinrichtung kann zumindest zum Bestimmen des Leistungssollwerts basierend auf dem detektierten Netzfehler eingerichtet sein. Unter einem Netzfehler ist vorliegend insbesondere ein elektrischer Netzfehler zu verstehen, welcher die Übertragung von elektrischer Leistung zumindest erschwert. Beispielsweise kann das mindestens eine Fehlerdetektionsmodul ein Differenzmessmittel umfassen. Beispielsweise kann ein Abschnitt des Kabelnetzes bzw. eine elektrische Verbindung des Kabelnetzes, wie ein Seekabel zwischen zwei Windenergieeinrichtungen (z.B. Windkraftanlage, (Offshore-)Umspannstation, Onshore-Station, etc.), durch ein Differenzmessmittel überwacht werden. So kann beispielsweise der jeweilige Stromwert an beiden Enden des Abschnitts des Kabelnetzes erfasst werden. Die Differenz kann aus den beiden erfassten Stromwerten bestimmt werden. Auch kann eine Vergleichsoperation durchgeführt werden. Beispielsweise kann zwischen den jeweiligen Strommesseinrichtungen an den Enden ein Kommunikationskanal für einen Datenaustausch der Stromwerte vorgesehen sein. Mindestens eine der Strommesseinrichtungen kann zur Bestimmung der Differenz bzw. Summe eingerichtet sein. Es versteht sich, dass andere elektrische Parameter (z.B. Spannung) verwendet werden können. Im störungsfreien Normalbetrieb des Windenergiesystems sind die Beträge der beiden bestimmten Stromwerte gleich. Ein Netzfehler des bestimmten Abschnitts liegt insbesondere dann vor, wenn die Differenz bzw. Summe der bestimmten Stromwerte ungleich null ist. Es versteht sich, dass Grenzwerte vorgegeben werden können, um die im realen Betrieb auftretenden Stromverluste der elektrischen Verbindung zu berücksichtigen. Ebenso versteht es sich, dass andere Messverfahren eingesetzt werden können. Gemäß einer weiteren bevorzugten Ausführungsform kann das Fehlerdetektionsmodul zum Detektieren der Position des detektierten Netzfehlers innerhalb des Windenergiesystems eingerichtet sein. Hierdurch kann beispielsweise bestimmt werden, welche Windkraftanlagen und/oder welche Abschnitte des Kabelnetzes von dem Netzfehler betroffen sind. Die Reglereinrichtung kann zumindest zum Bestimmen des Leistungssollwerts basierend auf der Position des Netzfehlers eingerichtet sein. Beispielsweise kann (nur) der mindestens eine Leistungssollwert von der mindestens einen durch den Netzfehler betroffen Windkraftanlage angepasst werden. "Betroffen" meint, dass der Netzfehler (indirekt) die maximal zulässige, abgebbare Leistung der Windkraftanlage beeinflusst, insbesondere reduziert, da sonst weitere Beschädigungen an elektrischen Betriebsmitteln auftreten können.

Gemäß der Erfindung umfasst die Zustandserfassungseinrichtung mindestens ein Schaltzustandsauswertemodul. Das Schaltzustandsauswertemodul ist zum Bestimmen der elektrischen (augenblicklichen) Topologie des Windenergiesystems basierend auf den Schaltzuständen einer Mehrzahl von elektrischen Schalteinrichtungen des Windenergiesystems, insbesondere des Kabelnetzes, eingerichtet.

Die Reglereinrichtung ist zum Bestimmen des Leistungssollwerts basierend auf der bestimmten elektrischen Topologie des Windenergiesystems eingerichtet. Unter der Topologie ist insbesondere die elektrische Topologie, also die elektrischen Verbindungen zwischen den verschiedenen Windenergieeinrichtungen, zu verstehen. So kann das Windenergiesystem, insbesondere das Kabelnetz, eine Mehrzahl von Schaltereinrichtungen aufweisen, um elektrische Verbindungen herzustellen und zu trennen. Wie oben beispielsweise ausgeführt wurde, kann bei Detektion eines Netzfehlers in einem bestimmten Abschnitt des Kabelnetzes dieser elektrische Verbindungsabschnitt getrennt und anstelle von diesem elektrischen Verbindungsabschnitt beispielsweise ein anderer (bisher getrennter) elektrischer Verbindungsabschnitt hergestellt werden. Eine Schaltereinrichtung kann über einen Sensor verfügen, um den (augenblicklichen) Schaltzustand zu detektieren. Dieser kann beispielsweise an ein (zentrales) Schaltzustandsauswertemodul des Windenergiesystems übertragen werden. Das Schaltzustandsauswertemodul kann basierend auf den empfangenen Schaltzuständen die augenblickliche (tatsächlich vorliegende) elektrische Topologie des Windenergiesystems bestimmen. Dies verbessert die Regelung noch weiter, da eine genauere individuelle Ansteuerung der Mehrzahl von Windkraftanlagen mit individualisierten Leistungssollwerten möglich ist.

Darüber hinaus ist die Zustandserfassungseinrichtung zum Bereitstellen eines thermischen Modells der elektrischen Topologie des Windenergiesystems eingerichtet.

Dies kann beispielsweise in einer Speichereinrichtung gespeichert sein. Basierend auf dem elektrischen Modell können beispielsweise die Auswirkungen eines Netzfehlers und/oder die Änderung von mindestens einem Leistungssollwert von mindestens einer Windkraftanlage simuliert werden. Die Reglereinrichtung ist zumindest zum Bestimmen des Leistungssollwerts basierend auf dem bereitgestellten thermischen Modell, insbesondere einer mit dem thermischen Modell durchgeführten Simulation, eingerichtet.

Ein weiterer Aspekt der Anmeldung ist eine Reglervorrichtung für ein Windenergiesystem, insbesondere ein zuvor beschriebenes Windenergiesystem. Die Reglervorrichtung umfasst mindestens eine Temperaturerfassungseinrichtung, eingerichtet zum Erfassen der Temperatur eines Kabelnetzes. Das (insbesondere zuvor beschriebene) Kabelnetz ist zum Übertragen der von einer Mehrzahl von Windkraftanlagen in das Kabelnetz eingespeisten elektrischen Leistung eingerichtet. Die Reglervorrichtung umfasst mindestens eine Zustandserfassungseinrichtung, eingerichtet zum Erfassen des Zustands des Windenergiesystems. Die Reglervorrichtung umfasst mindestens eine Reglereinrichtung, eingerichtet zum Bestimmen von mindestens einem Leistungssollwert zum Regeln der von mindestens einer der Windkraftanlagen in das Kabelnetz eingespeisten Leistung basierend auf der erfassten Temperatur und dem erfassten Zustand.

Die Reglervorrichtung kann insbesondere eine zentrale Reglervorrichtung des Windenergiesystems sein. Die Reglervorrichtung kann zum Regeln von sämtlichen Windkraftanlagen des Windenergiesystems eingerichtet sein. Beispielsweise kann die Reglervorrichtung auf einer (Offshore-)Umspannstation angeordnet sein. Die Reglervorrichtung kann insbesondere eine zuvor beschriebene Reglereinrichtung, eine zuvor beschriebene Temperaturerfassungseinrichtung und/oder eine zuvor beschriebene Zustandserfassungseinrichtung umfassen.

Ein noch weiterer Aspekt der Anmeldung ist ein Verfahren zum Regeln von mindestens einer Windkraftanlage von mindestens einem Windenergiesystem, insbesondere einem zuvor beschriebenen Windenergiesystem. Das Verfahren umfasst:

- Erfassen der Temperatur eines Kabelnetzes,
- wobei das Kabelnetz zum Übertragen der von einer Mehrzahl von Windkraftanlagen in das Kabelnetz eingespeisten elektrischen Leistung eingerichtet ist,
- Erfassen des Zustands des Windenergiesystems, und
- Bestimmen von mindestens einem Leistungssollwert zum Regeln der von mindestens einer der Windkraftanlagen in das Kabelnetz eingespeisten Leistung basierend auf der erfassten Temperatur und dem erfassten Zustand.

Es sei angemerkt, dass vorliegend unter dem Begriff "Strom" der "Scheinstrom" und unter dem Begriff "Leistung"

**EP 3 645 865 B1**

die "Scheinleistung" zu verstehen ist, sofern nichts anderes angegeben ist. Ferner sei angemerkt, dass die Reglereinrichtung den mindestens einen Leistungssollwert basierend auf einer Mehrzahl der zuvor beschriebenen Kriterien bestimmen kann. Darüber hinaus können anmeldungsgemäße Einrichtungen, Module, etc. aus Hardwarekomponenten (z.B. Prozessoren, Schnittstellen, Speichermitteln, etc.) und/oder Softwarekomponenten gebildet sein.

Die Erfindung wird durch die beigefügten unabhängigen Ansprüche definiert, die abhängigen Ansprüche stellen Unteroptionen bereit.

Es gibt nun eine Vielzahl von Möglichkeiten, das anmeldungsgemäße Windenergiesystem, die anmeldungsgemäße Reglervorrichtung und das anmeldungsgemäße Verfahren auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1    eine schematische Ansicht eines Ausführungsbeispiels eines Windenergiesystems gemäß der vorliegenden Anmeldung,

Fig. 2    eine schematische Ansicht eines Ausführungsbeispiels einer Reglervorrichtung gemäß der vorliegenden Anmeldung,

Fig. 3    eine schematische Ansicht eines weiteren Ausführungsbeispiels einer Reglervorrichtung gemäß der vorliegenden Anmeldung, und

Fig. 4    ein Diagramm eines Ausführungsbeispiels eines Verfahrens gemäß der vorliegenden Anmeldung.

Nachfolgend werden für gleiche Elemente gleiche Bezugszeichen verwendet.

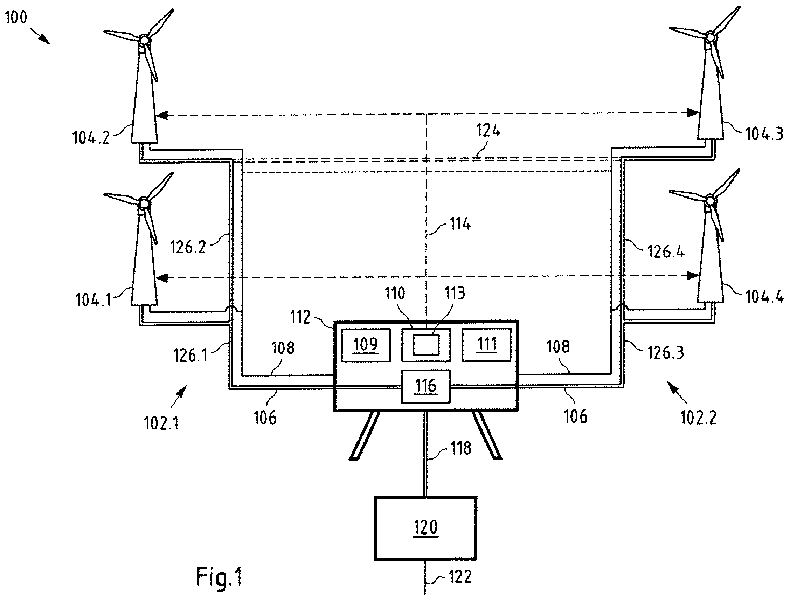

Die Figur 1 zeigt eine schematische Ansicht eines Ausführungsbeispiels eines Windenergiesystems 100 gemäß der vorliegenden Anmeldung. Das dargestellte Windenergiesystem 100 ist insbesondere ein Offshore-Windenergiesystem 100. Das Offshore-Windenergiesystem 100 umfasst eine Mehrzahl von Windenergieeinrichtungen 104, 112 und 120. Insbesondere ist eine Offshore-Umspannstation 112 angeordnet. Über ein Kabelnetz 106 ist eine Mehrzahl von Windkraftanlagen elektrisch mit der Offshore-Umspannstation 112, insbesondere einer Transformatoreinrichtung 116 der Offshore-Umspannstation 112, verbunden. Das Kabelnetz 106 umfasst eine Mehrzahl von Seekabeln, die zwischen verschiedenen Windkraftanlagen 104.1 bis 104.4 angeordnet sind. Darüber hinaus umfasst das Kabelnetz mindestens ein Seekabel zwischen der Offshore-Umspannstation 112 und einer Onshore-Kopfstation 120. Die Onshore-Kopfstation 120 dient u.a. als elektrischer Anschlusspunkt, um die von dem Windenergiesystem 100 bereitgestellte bzw. erzeugte elektrische Energie in ein weiteres elektrisches System 122, beispielsweise ein angeschlossenes öffentliches Stromnetz 122, einzuspeisen. Demnach ist das Stromnetz 122 kein Bestandteil des anmeldungsgemäßen Windenergiesystems 100.

Wie ferner aus der Figur 1 zu entnehmen ist, sind die Windkraftanlagen 104.1 bis 104.4 vorliegend in Form von zwei Strängen 102.1,102.2 angeordnet. Zu Gunsten einer besseren Übersicht sind vorliegend nur zwei Stränge 102.1, 102.2 mit jeweils nur zwei Windkraftanlagen 104.1 bis 104.4 dargestellt. Gemäß anderen Varianten kann ein Strang drei oder mehr Windkraftanlagen aufweisen und/oder es können drei oder mehr Stränge vorgesehen sein.

Die Windkraftanlagen 104.1, 104.2 des ersten Strangs 102.1 sind über elektrische Verbindungen 126.1, 126.2 in Form von Seekabeln 126.1, 126.2 in Reihe miteinander geschaltet. Über diese elektrischen Verbindungen 126.1, 126.2 bzw. Verbindungsabschnitte 126.1, 126.2 kann die von den Windkraftanlagen 104.1, 104.2 erzeugte elektrische Energie bzw. Leistung übertragen werden. Insbesondere ist zwischen jeweils zwei benachbarten Windkraftanlagen 104.1, 104.2 zumindest ein Seekabel 126.2 angeordnet. Die Windkraftanlagen 104.3, 104.4 des weiteren Strangs 102.2 können in entsprechender Weise miteinander elektrisch verbunden sein.

Die erste Windkraftanlage 104.1 des ersten Strangs 102.1 ist ferner mit der Offshore-Umspannstation 112 bzw. Substation 112 elektrisch verbunden. In entsprechender Weise ist die erste Windkraftanlage 104.4 des weiteren Strangs 102.2 mit der Offshore-Umspannstation 112 elektrisch verbunden. Darüber hinaus ist die am (anderen) Ende des erstens Strangs 102.1 angeordnete Windkraftanlage 104.2 mit der am Ende des weiteren Strangs 102.2 angeordnete Windkraftanlage 104.3 elektrisch verbindbar, Hierfür kann eine elektrische Verbindung 124 (Loop-Verbindung) des Kabelnetzes 106 durch Schließen mindestens einer (nicht gezeigten) Schaltereinrichtung hergestellt werden. Darüber hinaus können weitere (nicht gezeigte) Schaltereinrichtungen an anderen Stellen des Kabelnetzes 106 vorgesehen sein, um beispielsweise eine elektrische Verbindung 126.2, 126.4 zwischen zwei Windkraftanlagen 104.1 bis 104.4 aufgrund eines Netzfehlers innerhalb des Windenergiesystems 100 zu trennen.

Sämtliche Windkraftanlagen 104.1 bis 104.4 können im Wesentlichen gleich ausgebildet sein. Eine Windkraftanlage 104.1 bis 104.4 kann einen (nicht gezeigten) Generator aufweisen, der die kinetische Energie des Winds in elektrische Energie wandelt.

Ferner ist vorliegend mindestens ein Lichtwellenleiter 108 in den Kabeln des Kabelnetzes 106 integriert. Lediglich zu Gunsten einer besseren Übersicht verläuft der Lichtwellenleiter 108 vorliegend parallel zu den Kabeln des Kabelnetzes 106. Der Lichtwellenleiter 108 ist insbesondere eingerichtet, eine Temperaturmessung des Kabelnetzes zu ermöglichen. Insbesondere kann eine Temperaturerfassungseinrichtung 109 mit dem Lichtwellenleiter 108 gekoppelt sein. Beispielsweise kann jeder Strang separat überwacht werden. Durch Reflexionsmessungen kann eine Mehrzahl von Temperaturwerten an einer Mehrzahl von Kabelnetzpositionen gemessen und erfasst werden. Der mindestens eine erfasste Temperaturwert kann an eine Reglereinrichtung 113 einer Reglervorrichtung 110 übergeben werden.

Darüber hinaus ist eine Zustandserfassungseinrichtung 111 angeordnet. Die Zustandserfassungseinrichtung 111 ist eingerichtet, den augenblicklichen (elektrischen) Zustand, beispielsweise basierend auf den Schaltungszuständen der (nicht gezeigten) Schalteinrichtungen, zu bestimmen. Der erfasste Zustand kann an die Reglereinrichtung 113 der Reglervorrichtung 110 übergeben werden.

Die Reglereinrichtung 113 ist zum Bestimmen von mindestens einem Leistungssollwerts für mindestens eine Windkraftanlage 104.1 bis 104.4 basierend auf der erfassten Temperatur und dem erfassten Zustand eingerichtet. Eine nähere Beschreibung der Regelung erfolgt nachfolgend.

Über ein Kommunikationsnetz 114 kann der mindestens eine Leistungssollwert an die mindestens eine Windkraftanlage 104.1 bis 104.4 übertragen werden. Ein (nicht gezeigtes) lokales Steuermodul einer Windkraftanlage 104.1 bis 104.4 kann beispielsweise die Leistungsabgabe der Windkraftanlage 104.1 bis 104.4 derart steuern, dass die in das Kabelnetz 106 eingespeiste Leistung den Leistungssollwert zumindest nicht überschreitet. Es versteht sich, dass der Leistungssollwert einen Stromsollwert umfassen kann.

Im vorliegenden Ausführungsbeispiel sind die Reglervorrichtung 110, die Temperaturerfassungseinrichtung 109 und die Zustandserfassungseinrichtung 111 in der Offshore-Umspannstation 112 angeordnet. Es versteht sich, dass zumindest eines dieser Elemente auch an einem anderen Ort (z.B. der Kopfstation 120) angeordnet sein kann.

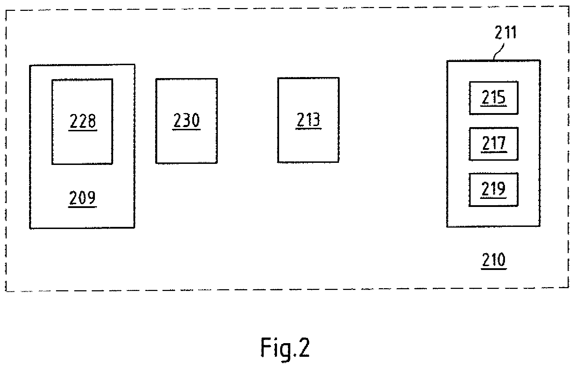

Die Figur 2 zeigt eine schematische Ansicht eines Ausführungsbeispiels einer (zentralen) Reglervorrichtung 210 für ein Windenergiesystem gemäß der vorliegenden Anmeldung. Im vorliegenden Ausführungsbeispiel sind in der Reglervorrichtung 210 die Reglereinrichtung 213, die Temperaturerfassungseinrichtung 209 und die Zustandserfassungseinrichtung 211 integriert.

Die Temperaturerfassungseinrichtung 209 erfasst insbesondere eine Mehrzahl von Temperaturwerten von unterschiedlichen Messpunkten. Die Temperaturerfassungseinrichtung 209 umfasst ein Maximum-Bestimmungsmodul 228 zum Bestimmen des maximalen Temperaturwerts aus der Mehrzahl von erfassten Temperaturwerten (z.B. von einem ersten Strang). Der bestimmte maximale Temperaturwert kann einem Vergleichsmodul 230 breitgestellt werden.

Darüber hinaus ist die Temperaturerfassungseinrichtung 209 eingerichtet, zumindest die Kabelnetzposition des bestimmten maximalen Temperaturwerts zu bestimmen. Insbesondere kann die Bestimmung mittels der Reflexionsmessung erfolgen. Die bestimmte Kabelnetzposition kann der Reglereinrichtung 213 bereitgestellt werden.

Das Vergleichsmodul 230 ist insbesondere eingerichtet, den bereitgestellten Temperaturwert mit einer vorgegebenen Solltemperatur zu vergleichen. Wie oben beschrieben wurde, kann die Solltemperatur von dem 2K-Kriterium abhängen. Das Vergleichsergebnis, insbesondere ein Differenzwert zwischen dem bereitgestellten Temperaturwert und der Solltemperatur, kann der Reglereinrichtung 213 bereitgestellt werden.

Ferner umfasst die Zustandserfassungseinrichtung ein Fehlerdetektionsmodul 215, ein Speichermodul 217 und ein Schaltzustandsauswertemodul 219. Das Fehlerdetektionsmodul 215 ist eingerichtet, einen elektrischen Netzfehler innerhalb des Windenergiesystems (z.B. System 100) zu bestimmen. Ein Netzfehler in einem weiteren System (z.B. 122) kann nicht bestimmt werden. Darüber hinaus kann das Fehlerdetektionsmodul 215 zumindest auch die Fehlerposition, also beispielsweise den betroffenen elektrischen Verbindungsabschnitt (z.B. 126.1 bis 126.4, 118), bestimmen.

Alternativ oder zusätzlich kann vorgesehen sein, dass das Fehlerdetektionsmodul 215 die Art des Netzfehlers bestimmen kann. Wie oben beschrieben wurde, kann das Fehlerdetektionsmodul 215 über (nicht gezeigte) Sensoren verfügen oder mit diesen verbunden sein, die an mindestens einem elektrischen Verbindungsabschnitt (z.B. 126.1 bis 126.4, 118) eine Differenzmessung von zumindest einem elektrischen Parameter (z.B. Stroms) ermöglichen.

Der detektierte Netzfehler und beispielsweise die Position des Netzfehlers können der Reglereinrichtung 213 bereitgestellt werden. Vorzugsweise kann das Fehlerdetektionsmodul 215 den detektierten Netzfehler und beispielsweise die Position des Netzfehlers auch einem (nicht gezeigten) Schaltsteuermodul zur Verfügung stellen. Basierend auf den bereitgestellten Daten kann das Schaltsteuermodul mindestens eine (nicht gezeigte) Schalteinrichtung ansteuern, um eine Änderung des Schaltzustands zu bewirken. Beispielsweise kann eine elektrische Verbindung, in der sich der Netzfehler befindet, getrennt und eine Loop-Verbindung geschlossen werden.

Das Speichermodul 217 kann mindestens ein thermisches Modell bereitstellen, welches beispielsweise für eine Simulation der Auswirkung eines erfassten Netzfehlers und/oder einer Änderung von mindestens einem Leistungssollwert genutzt werden kann.

Das Schaltzustandsauswertemodul 219 ist insbesondere eingerichtet, die jeweiligen augenblicklichen Schaltzustände der (nicht gezeigten) Schalteinrichtungen des Windenergiesystems zu erfassen. Beispielsweise kann hierfür jede Schalteinrichtung über einen entsprechend konfigurierten Sensor verfügen, der einen augenblicklichen Schaltzustand an die Schaltzustandsauswertemodul 219 übertragen kann. Basierend auf den bereitgestellten Sensordaten (z.B. "geschlossen", "geöffnet", "defekt", etc.) kann das Schaltzustandsauswertemodul 219 die augenblickliche elektrische Topologie, also den elektrischen Verbindungszustand des Windenergiesystems, bestimmen. Auch die augenblickliche elektrische Topologie kann der Reglereinrichtung 213 bereitgestellt werden.

Die Reglereinrichtung 213 kann vorzugsweise basierend auf dem Vergleichsergebnis und mindestens einem Zustandsparameter, vorzugsweise sämtliche zuvor genannten Zustandsparameter, mindestens einen Leistungssollwert für mindestens eine Windkraftanlage - falls erforderlich - anpassen. Alternativ oder zusätzlich können weitere Zustandsparameter, wie Zustand der Windkraftanlage (Wartungszustand, Fehlerzustand, etc.), von der Reglereinrichtung 213 für die Bestimmung des mindestens einen Leistungssollwerts berücksichtigt werden.

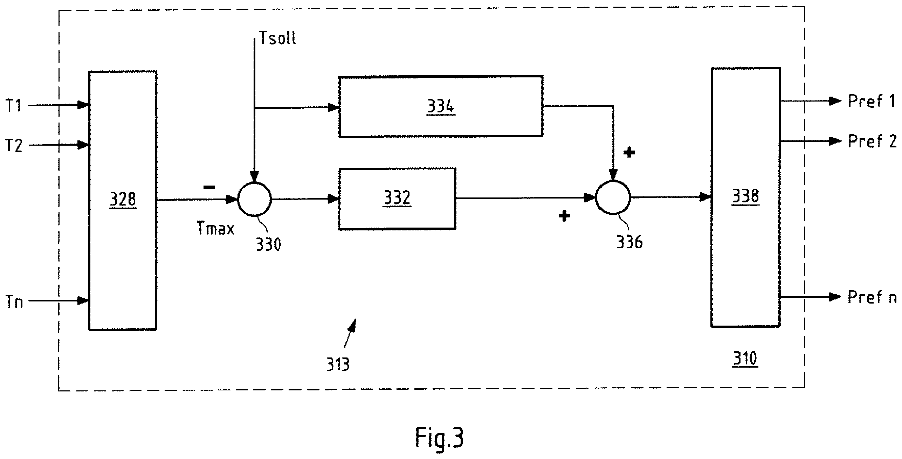

Die Figur 3 zeigt eine weitere schematische Ansicht eines Ausführungsbeispiels einer Reglervorrichtung 310 gemäß der vorliegenden Anmeldung. Zur Vermeidung von Wiederholungen werden nachfolgend im Wesentlichen nur die Unterschiede zu dem Ausführungsbeispiel nach Figur 2 beschrieben. Für die anderen Komponenten der Reglervorrichtung 310 wird insbesondere auf die obigen Ausführungen verwiesen.

Eine Vielzahl von erfassten Temperaturwerten $T_1$ bis $T_n$, die an einer entsprechenden Vielzahl von Messstellen bzw. Kabelnetzposition (z.B. von einem Strang) gemessen wurden, wird einem Maximum-Bestimmungsmodul 328 zugeführt. Das Maximum-Bestimmungsmodul 328 ist eingerichtet, den maximalen Temperaturwert $T_{max}$ aus den bereitgestellten Temperaturwerten $T_1$ bis $T_n$ zu bestimmen. Dieser maximale Temperaturwert $T_{max}$ wird an ein Vergleichsmodul 230 geliefert. Das Vergleichsmodul 230 generiert eine Differenz aus einer vorgegebenen Solltemperatur $T_{soll}$ und der maximalen Temperatur $T_{max}$. Die Solltemperatur $T_{soll}$ ist beispielsweise $T_{soll} = 90°C - \Delta T$, wobei $\Delta T$ eine Sicherheitsspanne ist.

Die Differenz wird einem Reglerelement 332 einer Reglereinrichtung 313 zugeführt. Das Reglerelement 332 ist beispielsweise ein PI-Regler 332, der ein entsprechendes Ausgangssignal generiert. Ferner kann ein modellbasiertes Vorsteuerungsmodul 334 vorgesehen sein. Die Ausgangssignale der Module 332, 334 werden addiert und zur Generierung von Leistungssollwerten $P_{ref1}$ bis $P_{refn}$ für die Windkraftanlagen $WK_1$ bis $WK_n$ einem entsprechenden Generierungsmodul 338 zur Verfügung gestellt. Diese werden anschließend, zumindest bei einer Änderung eines Leistungssollwertes $P_{ref1}$ bis $P_{refn}$, an die Windkraftanlagen $WK_1$ bis $WK_n$ übertragen. Die entsprechenden Windkraftanlagen $WK_1$ bis $WK_n$ passen dann in oben beschriebener Weise die eingespeiste Leistung basierend auf den Leistungssollwerten $P_{ref1}$ bis $P_{refn}$ an.

Es versteht sich, dass andere Reglereinrichtungen und/oder Reglerelemente eingesetzt werden können.

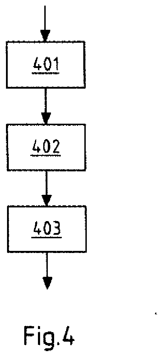

Figur 4 zeigt ein Diagramm eines Ausführungsbeispiels eines Verfahrens gemäß der vorliegenden Anmeldung, insbesondere ein Verfahren zum Regeln von mindestens einer Windkraftanlage von mindestens einem Windenergiesystem, insbesondere einem zuvor beschriebenen Windenergiesystem. Beispielsweise kann hierfür eine zuvor beschriebene Reglervorrichtung verwendet werden. Insbesondere ist unter einer Regelung einer Windkraftanlage die Regelung der abgegebenen elektrischen Leistung bzw. des abgegebenen elektrischen Stroms an das Kabelnetz zu verstehen.

In einem ersten Schritt 401 kann beispielsweise in zuvor beschriebener Weise die Temperatur eines Kabelnetzes erfasst werden. Das Kabelnetz ist insbesondere zum Übertragen der von einer Mehrzahl von Windkraftanlagen in das Kabelnetz eingespeisten elektrischen Leistung eingerichtet. Ferner kann in einem weiteren Schritt 402, der vorzugsweise parallel zu Schritt 401 erfolgt, der Zustand des Windenergiesystems, beispielsweise in zuvor beschriebener Weise, erfasst werden. Die Schritte 401 und 402 können im Betrieb des Windenergiesystems vorzugsweise jeweils nahezu kontinuierlich durchgeführt werden

Im nächsten Schritt 403 kann mindestens ein Leistungssollwert zum Regeln der von mindestens einer der Windkraftanlagen in das Kabelnetz eingespeisten Leistung basierend auf der erfassten Temperatur und dem erfassten Zustand, beispielsweise in zuvor beschriebener Weise, bestimmt werden.

Anmeldungsgemäß können die Windkraftanlagen bzw. Windturbinen über Stränge bzw. Strings mit der Umspannplattform verbunden sein, d.h. mehrere Turbinen sind über ein Kabel verbunden. Im Fehlerfall eines Kabels können Strings zu einem Loop miteinander gekoppelt werden, um nicht diverse Turbinen im betroffenen String als Erzeuger zu verlieren. Die Leistung der Windturbinen kann beispielsweise über ein Power Management Tool geregelt werden. Die Stromlast im intakten Kabel erhöht sich entsprechend der zusätzlich angeschlossenen Leistung. Um die Einhaltung der Spezifikation des Kabels zu gewährleisten, wird vorzugsweise ein Cable Monitoring System zur Temperaturüberwachung eingesetzt.

Bei der Anpassung der Leistungen muss der Zustand des Windenergiesystems, insbesondere Rahmenparameter wie die aktuelle Topologie, Kabeltemperaturen, Leistungen und Leistungsreserven der Windturbinen etc. berücksichtigt und Erwärmungseffekte durch Leistungsanpassungen kalkuliert werden. Durch eine intelligente Kopplung in einem anmeldungsgemäßen Regler kann die Leistungsanpassung der Turbinen automatisch erfolgen. Mögliche Fehlbedienungen und Versäumnisse können vermieden und eine Entlastung des Betriebspersonals bereitgestellt werden. Durch diese Maßnahme wird zudem die im Fehlerfall maximal mögliche Energiemenge exportiert werden, ohne elektrische Betriebsmittel zu gefährden.

Das Cable-Monitoring System und das Power Management Tool der Turbinen werden über eine anmeldungsgemäße Reglervorrichtung so gekoppelt, dass Temperaturanstiege in einzelnen Kabelsegmenten des Kabelnetzes direkt zu einer Leistungsreduzierung der beteiligten Turbinen führen. Für die Umsetzung können von den Herstellern unterstützte IEC Standards verwendet werden (z.B. auf Turbinenseite die Schnittstelle IEC 61400-25, auf Seiten des Cable Monitoring IEC 61850 oder IEC 61870-5-104). Um die augenblickliche elektrische Topologie des Windenergiesystems bzw. Windparks zu erfassen, können vorzugsweise Zustandsinformationen, insbesondere Statusinformationen, wie Schalterstellungen via IEC-61870-5-104 von der Stationsleittechnik der Umspannplattform (HV SCADA) übertragen werden

Vorzugsweise können folgende Informationen an die anmeldungsgemäße (zentrale) Reglervorrichtung insbesondere zur Kopplung der verschiedenen Einzelsysteme übermittelt werden:

- Cable Monitoring (Temperaturwerte, Position (Kabelnetzposition) der Hotspots (ein oder mehrere max. Temperaturwerte) in den Kabelsträngen des Kabelnetzes),
- HV SCADA Parameter (Schalterstellungen zur Auswertung der aktuellen elektrischen Parktopologie)
- Windturbinen bzw. Windkraftanlagen (Zustand bzw. Status bez. der Betriebsbereitschaft)

Vorzugsweise können folgende Information von der anmeldungsgemäßen (zentralen) Reglervorrichtung an die Windturbinen übermittelt werden: Sollwert für Wirkleistung

Beispielsweise sind acht parallele anmeldungsgemäße Reglervorrichtung bzw. Regelkreise (für jeden Strang eine Reglervorrichtung) vorgesehen, welche die Kabeltemperatur begrenzen, in dem sie (begrenzte) Sollwerte an die jeweils zugeordneten, einspeisenden Windkraftanlagen übergeben. Hierbei kann insbesondere berücksichtig werden, dass der Hotspot an verschiedenen Stellen liegen kann, so dass u.U. nur ein Teil der Windkraftanlagen in einem Strang begrenzt werden muss.

## Patentansprüche

1. Windenergiesystem (100), insbesondere Offshore-Windenergiesystem (100), umfassend:

   - eine Mehrzahl von mit mindestens einem Kabelnetz (106) verbundenen Windkraftanlagen (104.1, 104.2, 104.3, 104.4),
   - wobei das Kabelnetz (106) zum Übertragen der von den verbundenen Windkraftanlagen (104.1, 104.2, 104.3, 104.4) eingespeisten elektrischen Leistung eingerichtet ist,
   - mindestens eine Reglervorrichtung (110, 210, 310), eingerichtet zum Regeln der von mindestens einer der Windkraftanlagen (104.1, 104.2, 104.3, 104.4) in das Kabelnetz (106) eingespeisten Leistung durch Bereitstellen von mindestens einem Leistungssollwert,

   wobei

   - mindestens eine Temperaturerfassungseinrichtung (109, 209) vorgesehen ist, eingerichtet zum Erfassen der Temperatur des Kabelnetzes (106),
   - mindestens eine Zustandserfassungseinrichtung (111, 211) vorgesehen ist, eingerichtet zum Erfassen des Zustands des Windenergiesystems (100),
   - die Reglervorrichtung (110, 210, 310) mindestens eine Reglereinrichtung (113, 213, 313) umfasst, eingerichtet zum Bestimmen des Leistungssollwerts basierend auf der erfassten Temperatur und dem erfassten Zustand,

   **dadurch gekennzeichnet, dass**

   - die Zustandserfassungseinrichtung (111, 211) mindestens ein Schaltzustandsauswertemodul (219) umfasst, eingerichtet zum Bestimmen der elektrischen Topologie des Windenergiesystem (100) basierend auf den Schaltzuständen einer Mehrzahl von elektrischen Schalteinrichtungen des Windenergiesystems (100),
   - die Reglereinrichtung (113, 213, 313) zumindest zum Bestimmen des Leistungssollwerts basierend auf der bestimmten elektrischen Topologie des Windenergiesystems (100) eingerichtet ist,
   - die Zustandserfassungseinrichtung (111, 211) zum Bereitstellen eines thermischen Modells der elektrischen Topologie des Windenergiesystems (100) eingerichtet ist, und
   - die Reglereinrichtung (113, 213, 313) zumindest zum Bestimmen des Leistungssollwerts basierend auf dem bereitgestellten thermischen Modell eingerichtet ist.

2. Windenergiesystem (100) nach Anspruch 1, **dadurch gekennzeichnet, dass**

   - die Reglervorrichtung (110, 210, 310) mindestens ein Vergleichsmodul (230, 330) umfasst, eingerichtet zum Vergleichen der erfassten Temperatur und mindestens einer vorgegebenen Solltemperatur, und

- die Reglereinrichtung (113, 213, 313) zumindest zum Bestimmen des Leistungssollwerts basierend auf dem Vergleichsergebnis eingerichtet ist.

3. Windenergiesystem (100) nach einem der vorherigen Ansprüche, **dadurch gekennzeichnet, dass**

- die Temperaturerfassungseinrichtung (109, 209) zum Erfassen eines ersten Temperaturwerts an einer ersten Kabelnetzposition und mindestens eines weiteren Temperaturwerts an mindestens einer weiteren Kabelnetzposition eingerichtet ist, und
- die Reglereinrichtung (113, 213, 313) zumindest zum Bestimmen des Leistungssollwerts basierend auf dem maximalen Temperaturwert der zumindest zwei Temperaturwerte eingerichtet ist.

4. Windenergiesystem (100) nach Anspruch 3, **dadurch gekennzeichnet, dass**

- die Temperaturerfassungseinrichtung (109, 209) zum Bestimmen der Kabelnetzposition des maximalen Temperaturwerts der zumindest zwei Temperaturwerte eingerichtet ist, und
- die Reglereinrichtung (113, 213, 313) zumindest zum Bestimmen des Leistungssollwerts basierend auf der bestimmten Kabelnetzposition eingerichtet ist.

5. Windenergiesystem (100) nach einem der vorherigen Ansprüche, **dadurch gekennzeichnet, dass**

- die Zustandserfassungseinrichtung (111, 211) mindestens ein Fehlerdetektionsmodul (215) umfasst, eingerichtet zum Detektieren von mindestens einem Netzfehler innerhalb des Windenergiesystems (100), und
- die Reglereinrichtung (113, 213, 313) zumindest zum Bestimmen des Leistungssollwerts basierend auf dem detektierten Netzfehler eingerichtet ist.

6. Windenergiesystem (100) nach Anspruch 5, **dadurch gekennzeichnet, dass**

- das Fehlerdetektionsmodul (215) zum Detektieren der Position des detektierten Netzfehlers innerhalb des Windenergiesystems (100) eingerichtet ist, und
- die Reglereinrichtung (113, 213, 313) zumindest zum Bestimmen des Leistungssollwerts basierend auf der Position des Netzfehlers eingerichtet ist.

7. Reglervorrichtung (110, 210, 310) für ein Windenergiesystem (100), insbesondere ein Windenergiesystem (100) nach einem der vorherigen Ansprüche, umfassend:

- mindestens eine Temperaturerfassungseinrichtung (209), eingerichtet zum Erfassen der Temperatur eines Kabelnetzes (106),
- wobei das Kabelnetz (106) zum Übertragen der von einer Mehrzahl von Windkraftanlagen (104.1, 104.2, 104.3, 104.4) in das Kabelnetz (106) eingespeisten elektrischen Leistung eingerichtet ist,
- mindestens eine Zustandserfassungseinrichtung (211), eingerichtet zum Erfassen des Zustands des Windenergiesystems (100),
- mindestens eine Reglereinrichtung (213, 313), eingerichtet zum Bestimmen von mindestens einem Leistungssollwert zum Regeln der von mindestens einer der Windkraftanlagen (104.1, 104.2, 104.3, 104.4) in das Kabelnetz (106) eingespeisten Leistung basierend auf der erfassten Temperatur und dem erfassten Zustand,
- die Zustandserfassungseinrichtung (111, 211) mindestens ein Schaltzustandsauswertemodul (219) umfasst, eingerichtet zum Bestimmen der elektrischen Topologie des Windenergiesystem (100) basierend auf den Schaltzuständen einer Mehrzahl von elektrischen Schalteinrichtungen des Windenergiesystems (100),
- die Reglereinrichtung (113, 213, 313) zumindest zum Bestimmen des Leistungssollwerts basierend auf der bestimmten elektrischen Topologie des Windenergiesystems (100) eingerichtet ist,
- die Zustandserfassungseinrichtung (111, 211) zum Bereitstellen eines thermischen Modells der elektrischen Topologie des Windenergiesystems (100) eingerichtet ist, und
- die Reglereinrichtung (113, 213, 313) zumindest zum Bestimmen des Leistungssollwerts basierend auf dem bereitgestellten thermischen Modell eingerichtet ist.

8. Verfahren zum Regeln von mindestens einer Windkraftanlage (104.1, 104.2, 104.3, 104.4) von mindestens einem Windenergiesystem (100), insbesondere einem Windenergiesystem (100) nach einem der vorherigen Ansprüche 1 bis 6, umfassend:

- Erfassen der Temperatur eines Kabelnetzes (106),
- wobei das Kabelnetz (106) zum Übertragen der von einer Mehrzahl von Windkraftanlagen (104.1, 104.2, 104.3, 104.4) in das Kabelnetz (106) eingespeisten elektrischen Leistung eingerichtet ist,
- Erfassen des Zustands des Windenergiesystems (100), und
- Bestimmen von mindestens einem Leistungssollwert zum Regeln der von mindestens einer der Windkraftanlagen (104.1, 104.2, 104.3, 104.4) in das Kabelnetz (106) eingespeisten Leistung basierend auf der erfassten Temperatur und dem erfassten Zustand,
- Bestimmen, durch mindestens ein Schaltzustandsauswertemodul (219) einer Zustandserfassungseinrichtung (111, 211), der elektrischen Topologie des Windenergiesystem (100) basierend auf den Schaltzuständen einer Mehrzahl von elektrischen Schalteinrichtungen des Windenergiesystems (100), und
- Bestimmen, durch eine Reglereinrichtung (113, 213, 313), des Leistungssollwerts basierend auf der bestimmten elektrischen Topologie des Windenergiesystems (100) eingerichtet ist,
- Bereitstellen, durch die Zustandserfassungseinrichtung (111, 211), eines thermischen Modells der elektrischen Topologie des Windenergiesystems (100), und
- Bestimmen, durch die Reglereinrichtung (113, 213, 313), zumindest des Leistungssollwerts basierend auf dem bereitgestellten thermischen Modell.

**Claims**

1. A wind energy system (100), in particular an offshore wind energy system (100), comprising:

   - a plurality of wind turbines (104.1, 104.2, 104.3, 104.4) connected to at least one cable network (106),
   - wherein the cable network (106) is configured to transmit the electrical power fed-in by the connected wind turbines (104.1, 104.2, 104.3, 104.4),
   - at least one control apparatus (110, 210, 310) configured to control the power fed into the cable network (106) by at least one of the wind turbine (104.1, 104.2, 104.3, 104.4) by providing at least one power set point,

   wherein

   - at least one temperature detecting device (109, 209) is provided, configured to detect the temperature of the cable network (106),
   - at least one condition detecting device (111, 211) is provided, configured to detect the condition of the wind energy system (100), and
   - the control apparatus (110, 210, 310) comprises at least one control device (113, 213, 313) configured to determine the power set point based on the detected temperature and the detected condition,

   **characterized in that**

   - the condition detecting device (111, 211) comprises at least one switching condition evaluating module (219) configured to determine the electrical topology of the wind power system (100) based on the switching states of a plurality of electrical switching devices of the wind power system (100),
   - the control device (113, 213, 313) is configured at least to determine the power set point based on the determined electrical topology of the wind power system (100),
   - the condition detecting device (111, 211) is configured to provide a thermal model of the electrical topology of the wind energy system (100), and
   - the control device (113, 213, 313) is configured at least to determine the power set point based on the provided thermal model.

2. Wind energy system (100) according to claim 1, **characterized in that**

   - the control apparatus (110, 210, 310) comprises at least one comparing module (230, 330) configured to compare the detected temperature and at least one predetermined set temperature, and
   - the control device (113, 213, 313) is configured at least to determine the power set point based on the comparison result.

3. Wind energy system (100) according to one of the preceding claims, **characterized in that**

- the temperature detecting device (109, 209) is configured to detect a first temperature value at a first cable network position and at least one further temperature value at at least one further cable network position, and
- the control device (113, 213, 313) is configured at least to determine the power set point based on the maximum temperature value of the at least two temperature values.

4. Wind energy system (100) according to claim 3, **characterized in that**

- the temperature detecting device (109, 209) is configured to determine the cable network position of the maximum temperature value of the at least two temperature values, and
- the control device (113, 213, 313) is configured at least to determine the power set point based on the determined cable network position.

5. Wind energy system (100) according to one of the preceding claims, **characterized in that**

- the condition detecting device (111, 211) comprises at least one fault detecting module (215) configured to detect at least one network fault within the wind power system (100), and
- the control device (113, 213, 313) is configured at least to determine the power set point based on the detected network fault.

6. Wind energy system (100) according to claim 5, **characterized in that**

- the fault detecting module (215) is arranged to detect the position of the detected network fault within the wind power system (100), and
- the control device (113, 213, 313) is configured at least to determine the power set point based on the position of the network fault.

7. A control apparatus (110, 210, 310) for a wind energy system (100), in particular a wind energy system (100) according to one of the preceding claims, comprising:

- at least one temperature detecting device (209) configured to detect the temperature of a cable network (106),
- wherein the cable network (106) is configured to transmit the electrical power fed into the cable network (106) by a plurality of wind turbines (104.1, 104.2, 104.3, 104.4),
- at least one condition detecting device (211), configured to detect the condition of the wind energy system (100), and
- at least one control device (213, 313) configured to determine at least one power set point for controlling the power fed into the cable network (106) by at least one of the wind turbines (104.1, 104.2, 104.3, 104.4) based on the detected temperature and the detected condition
- the condition detecting device (111, 211) comprises at least one switching condition evaluating module (219) configured to determine the electrical topology of the wind power system (100) based on the switching states of a plurality of electrical switching devices of the wind power system (100),
- the control device (113, 213, 313) is configured at least to determine the power set point based on the determined electrical topology of the wind power system (100),
- the condition detecting device (111, 211) is configured to provide a thermal model of the electrical topology of the wind energy system (100), and
- the control device (113, 213, 313) is configured at least to determine the power set point based on the provided thermal model.

8. A method for controlling at least one wind turbine (104.1, 104.2, 104.3, 104.4) of at least one wind energy system (100), in particular a wind energy system (100) according to one of the preceding claims 1 to 6, comprising:

- detecting the temperature of a cable network (106),
- wherein the cable network (106) is configured to transmit the electrical power fed into the cable network (106) by a plurality of wind turbines (104.1, 104.2, 104.3, 104.4),
- detecting the condition of the wind energy system (100), and
- determining at least one power set point for controlling the power fed into the cable network (106) by at least one of the wind turbines (104.1, 104.2, 104.3, 104.4) based on the detected temperature and condition,
- determining, by at least one switching condition evaluating module (219) of a condition detecting device (111, 211), the electrical topology of the wind power system (100) based on the switching states of a plurality of electrical switching devices of the wind power system (100),
- determining, by the control device (113, 213, 313 the power set point based on the determined electrical topology of the wind power system (100),
- providing, by the condition detecting device (111, 211) a thermal model of the electrical topology of the wind energy system (100), and
- determining, by the control device (113, 213, 313), the power set point based on the provided thermal model.

**Revendications**

1. Système d'énergie éolienne (100), en particulier système d'énergie éolienne offshore (100), comprenant :

- une pluralité d'éoliennes (104.1, 104.2, 104.3, 104.4) reliées à au moins un réseau câblé (106),
- où le réseau câblé (106) est configuré pour transmettre la puissance électrique injectée par les éoliennes connectées (104.1, 104.2, 104.3, 104.4),
- au moins un dispositif de régulation (110, 210, 310), configuré pour réguler la puissance injectée par au moins l'une des éoliennes (104.1, 104.2, 104.3, 104.4) dans le réseau câblé (106) en fournissant au moins une valeur de consigne de puissance,

**où**

- au moins un dispositif de détection de température (109, 209) est prévu, configuré pour détecter la température du réseau câblé (106),
- au moins un dispositif de détection d'état (111, 211) est prévu, configuré pour détecter l'état du système d'énergie éolienne (100),
- le dispositif de régulation (110, 210, 310) comprend au moins un dispositif de régulation (113, 213, 313) adapté pour déterminer le valeur de consigne de puissance sur la base de la température et de l'état détecté,

**caractérisé en ce que**

- le dispositif de détection d'état (111, 211) comprend au moins un module d'évaluation d'état de commutation (219) configuré pour déterminer la topologie électrique du système d'énergie éolienne (100) sur la base des états de commutation d'une pluralité de dispositifs de commutation électriques du système d'énergie éolienne (100),
- le dispositif de régulation (113, 213, 313) est configuré pour déterminer au moins la valeur de consigne de puissance sur la base de la topologie électrique déterminée du système d'énergie éolienne (100),
- le dispositif de détection d'état (111, 211) est configuré pour fournir un modèle thermique de la topologie électrique du système d'énergie éolienne (100), et
- le dispositif de régulation (113, 213, 313) est configuré pour déterminer au moins la valeur de consigne de puissance sur la base du modèle thermique fourni.

2. Système d'énergie éolienne (100) selon la revendication 1, **caractérisé en ce que**

- le dispositif de régulation (110, 210, 310) comprend au moins un module de comparaison (230, 330), configuré pour comparer la température détectée et au moins une température de consigne prédéterminée, et
- le dispositif de régulation (113, 213, 313) est configuré pour déterminer au moins la valeur de consigne de puissance sur la base du résultat de la comparaison.

3. Système d'énergie éolienne (100) selon l'une des revendications précédentes, **caractérisé en ce que**

- le dispositif de détection de température (109, 209) est configuré pour détecter une première valeur de température à une première position de réseau câblé et au moins une autre valeur de température à au moins une autre position de réseau câblé, et
- le dispositif de régulation (113, 213, 313) est configuré pour déterminer au moins la valeur de consigne de puissance sur la base de la valeur de température maximale des au moins deux valeurs de température.

4. Système d'énergie éolienne (100) selon la revendication 3, **caractérisé en ce que**

- le dispositif de détection de température (109, 209) est configuré pour déterminer la position de réseau câblé de la valeur de température maximale des au moins deux valeurs de température, et
- le dispositif de régulation (113, 213, 313) est configuré pour déterminer au moins la valeur de consigne de puissance sur la base de la position de réseau câblé déterminée.

**5.** Système d'énergie éolienne (100) selon l'une des revendications précédentes, **caractérisé en ce que**

- le dispositif de détection d'état (111, 211) comprend au moins un module de détection de défaillance (215) configuré pour détecter au moins une défaillance de réseau dans le système d'énergie éolienne (100), et
- le dispositif de régulation (113, 213, 313) est configuré pour déterminer au moins la valeur de consigne de la puissance sur la base de la défaillance de réseau détectée.

**6.** Système d'énergie éolienne (100) selon la revendication 5, **caractérisé en ce que**

- le module de détection de défaillance (215) est configuré pour détecter la position de la défaillance de réseau détecté dans le système d'énergie éolienne (100), et
- le dispositif de régulation (113, 213, 313) est configuré pour déterminer au moins la valeur de consigne de puissance sur la base de la position de la défaillance de réseau.

**7.** Dispositif de régulation (110, 210, 310) pour un système d'énergie éolienne (100), en particulier un système d'énergie éolienne (100) selon l'une des revendications précédentes, comprenant :

- au moins un dispositif de détection de température (209), configuré pour détecter la température d'un réseau câblé (106),
- où le réseau câblé (106) est configuré pour transmettre la puissance électrique injectée dans le réseau câblé (106) par une pluralité d'éoliennes (104.1, 104.2, 104.3, 104.4),
- au moins un dispositif de détection d'état (211), configuré pour détecter l'état du système d'énergie éolienne (100),
- au moins un dispositif de régulation (213, 313) configuré pour déterminer au moins une valeur de consigne de puissance pour réguler la puissance injectée dans le réseau câblé (106) par au moins l'une des éoliennes (104.1, 104.2, 104.3, 104.4) sur la base de la température et de l'état détecté,
- le dispositif de détection d'état (111, 211) comprend au moins un module d'évaluation d'état de commutation (219) configuré pour déterminer la topologie électrique du système d'énergie éolienne (100) sur la base des états de commutation d'une pluralité de dispositifs de commutation électriques du système d'énergie éolienne (100),
- le dispositif de régulation (113, 213, 313) est configuré pour déterminer au moins la valeur de consigne de puissance sur la base de la topologie électrique déterminée du système d'énergie éolienne (100),
- le dispositif de détection d'état (111, 211) est configuré pour fournir un modèle thermique de la topologie électrique du système d'énergie éolienne (100), et
- le dispositif de régulation (113, 213, 313) est configuré pour déterminer au moins la valeur de consigne de puissance sur la base du modèle thermique fourni.

**8.** Procédé pour régler au moins une éolienne (104.1, 104.2, 104.3, 104.4) d'au moins un système d'énergie éolienne (100), en particulier un système d'énergie éolienne (100) selon l'une des revendications 1 à 6 précédentes, comprenant :

- détecter la température d'un réseau câblé (106),
- où le réseau câblé (106) est configuré pour transmettre la puissance électrique injectée dans le réseau câblé (106) par une pluralité d'éoliennes (104.1, 104.2, 104.3, 104.4),
- détecter l'état du système d'énergie éolienne (100), et
- déterminer au moins une valeur de consigne de puissance pour réguler la puissance injectée par au moins une des éoliennes (104.1, 104.2, 104.3, 104.4) dans le réseau câblé (106) sur la base de la température et de l'état détecté,
- déterminer, par au moins un module d'évaluation d'état de commutation (219) d'un dispositif de détection d'état (111, 211), la topologie électrique du système d'énergie éolienne (100) sur la base des états de commutation d'une pluralité de dispositifs de commutation électriques du système d'énergie éolienne (100), et
- déterminer, par un dispositif de régulation (113, 213, 313), la valeur de consigne de puissance sur la base de la topologie électrique déterminée du système d'énergie éolienne (100),

- fournir, par le dispositif de détection d'état (111, 211), un modèle thermique de la topologie électrique du système d'énergie éolienne (100), et
- déterminer, par le dispositif de régulation (113, 213, 313), au moins la valeur de consigne de puissance sur la base du modèle thermique fourni.

Fig.1

Fig.2

Fig.3

Fig.4

**IN DER BESCHREIBUNG AUFGEFÜHRTE DOKUMENTE**

**In der Beschreibung aufgeführte Patentdokumente**

- WO 2016058617 A
- EP 2636894 A